# EUROPEAN PATENT SPECIFICATION

(11) **EP 0 575 411 B1**
(45) Date of publication and mention of the grant of the patent: **02.12.1998**
(21) Application number: 92906382.4
(22) Date of filing: 13.03.1992
(51) Int. Cl.: C21D 9/00, C21D 9/08, C21D 9/52

(54) **A CONTINUOUS LINE FOR THE MANUFACTURE OF PARTLY HARDENED PRODUCTS**
KONTINUIERLICHE PRODUKTIONSLINIE ZUR HERSTELLUNG TEILGEHÄRTETER PRODUKTE
LIQUE DE PRODUCTION EN CONTINU FABRICATION DE PRODUITS PARTIELLEMENT DURCIS

(30) Priority: 14.03.1991 SE 9100774
(43) Date of publication of application: 29.12.1993
(73) Proprietor: PLANNJA AB, 951 88 Lulea (SE)
(72) Inventor: KERO, Ernst, S-951 40 Lulea (SE)
(74) Representative: Körber, Wolfhart, Dr. rer.nat.
(86) International application number: SE9200154
(87) International publication number: WO9216665

(56) References cited:
- US-A- 2 930 724

## Description

The present invention relates to a method and to apparatus for the manufacture of partly hardened, profiled thin metal sheet products.

A number of different products/elements which are shaped from thin metal sheet and which have been hardened, either completely or partly, in order to impart desired hardness and strength properties to the product are available commercially. In one case, the standard manufacturing procedure is one in which the product is first shaped and worked and then hardened in a subsequent working stage. Methods are also known in which the product is hardened while still located in a press shaping tool.

Those methods of manufacture hitherto applied result in undesirable restrictions in production rate/manufacturing rate, partly because of the complicated handling procedure involved and partly because of discontinuities in the manufacturing flow. In addition, hardening of selected mutually spaced ares of a finished product is often encumbered with a number of practical problems.

The US patent 2,930,724 describes a method for a surface-hardening a succession of spaced areas of a metal wire, in which the surface of the wire is momentarily heated to hardening temperature by a high-frequency magnetic field and is subsequently cooled or quenched by a cooling liquid upon interruption of the high-frequency field, which interruption causes a heat-insulating layer of volatilized liquid to collapse. During this method the metal wire to be hardened is advanced in a step-by-step manner.

The object of the present invention is to provide a method and an arrangement of apparatus which will enable hardened products, and then primarily partly hardened products made of profiled, thin metal sheet to be manufactured at a particularly high production rate. This object is achieved with the method and the apparatus according to the present invention and having the characteristic features set forth in the following claims.

Thus, the present invention enables shaped/profiled and partly hardened thin, metal-sheet products to be manufactured in a continuous stream in a manufacturing line, starting with a sheet-metal strip at the beginning of the manufacturing line and obtaining at the end of the manufacturing line a finished product which is subsequently handled in a suitable manner, for instance surface treated or packaged. Because the inventive manufacturing line is constructed or designed so as to enable manufacture to be carried out continuously, no time is wasted due to the necessity of feeding the starting material, e.g. strip-like starting material, stepwise into the manufacturing line, because of the necessity to interrupt the manufacturing process at some later manufacturing station, in order to complete a requisite working step.

The present invention enables the product under manufacture to be partly hardened, by which is meant hardened over mutually spaced areas or sections of the product, while leaving other, selected parts unhardened, in accordance with the invention. This is highly advantageous when these non-hardened parts or areas of the profile are to be subjected to comprehensive plastic deformation in order to shape the product to a desired final configuration. The invention also enables hardening to be effected at a stage when the product has passed through only an initial shaping stage and in which the configuration of the product is not as complicated as the configuration of the product in a later manufacturing stage as a result of further shaping operations to which said product is subjected.

The inventive method thus affords important economical advantages in comparison with alternative methods of manufacture applied hitherto.

The invention will now be described in more detail with reference to exemplifying embodiments thereof illustrated in the accompanying drawings, in which Figure 1 is a schematic side view of an inventive manufacturing line, wherein an example of how products produced in the manufacturing line are shaped and worked during their advancement through said line is illustrated by way of example schematically from above, in order to provide an understanding of the functions of the manufacturing line; and Figures 2 and 3 are examples of two alternative cross-sectional shapes of the center part of an end product, said center part exhibiting stiffenings in the form of grooves or flutes.

Mounted at the beginning of the inventive manufacturing line is a winding-off unit 1 which is adapted to carry at least one roll 2 of thin metal strip.

The winding-off unit 1 is followed by a strip straightening unit 3 which, e.g., includes a number of rollers 4, which function to straighten the metal sheet B unwound from the roll 2.

The straightening unit 3 is followed by a strip joining unit 5 which functions to join the terminal end of strip taken from a roll 2 with the leading end of strip taken from a fresh roll 2. When leaving the joining unit 5, the metal strip B is allowed to move in a looped path, a so-called storage loop 6, which functions to enable two strip ends to be joined in the joining unit 5 without needing to halt the manufacturing process for this purpose and also to take up irregularities in the speed at which the strip B advances through the manufacturing line.

The storage loop 6 is followed by a punch unit 7 which includes a so-called flying punch by means of which, e.g., an opening in the form of a slot S can be punched at desired positions along the metal strip B when so required. The punch unit 7 is thus only used when punching is required.

The next station in the manufacturing line is a straightening unit 8 which comprises a number of rollers 9 and the purpose of which is to again straighten the metal strip B.

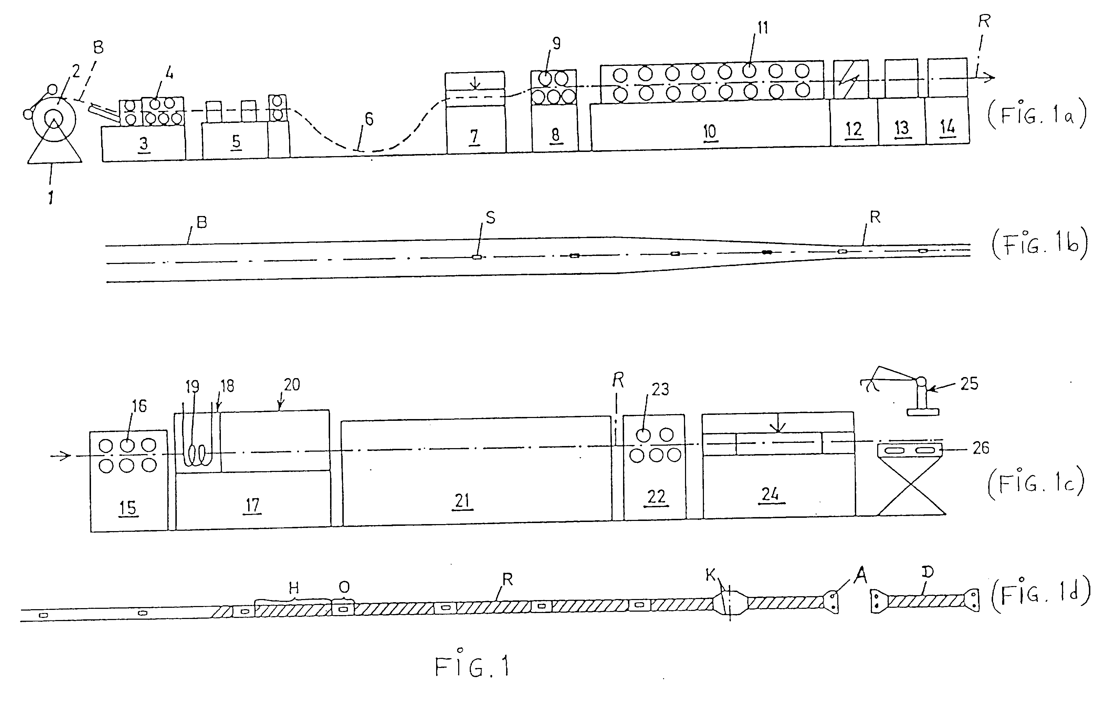

The straightening unit 8 is followed by a shaping unit 10 which includes, for instance, a so-called roller shaping device which includes a series of profiled rolls 11 which are configured to impart a desired cross-sectional shape to the metal strip B. In the case of the illustrated embodiment, this cross-sectional shape is circular, i.e. the shaping unit 10 shapes the strip B into a circular tube R. It will be understood, however, that the shaping unit 10 may be configured in a number of different ways and that as an alternative to the aforesaid roll shaping process, the shaping unit may be provided with a number of tensioning pulleys which function to impart a desired profile to the metal strip B. It will also be understood that the metal strip may be given other profiles than the circular-tubular profile shown in Figure 1. The profile R may thus also be open in its longitudinal direction.

The next station in the manufacturing line is preferably a welding unit 12 which is used to weld together the long side-edges of the strip B when desired, such as when producing a tube in the manufacturing line, as exemplified in Figure 1. The welding unit 12 may comprise any suitable pipe of welding equipment and welding can be performed with or without the use of an additive, according to what is considered appropriate for the welding method applied.

When the metal strip B includes slots S or openings, these slots or openings may be positioned so that the aforesaid welding operation will be continuous and thus not intermittent.

The welding unit 12 is followed by a cooling or quenching unit 13 in which the temperature of the welded metal tube R is lowered with the aid of a gaseous and/or liquid coolant.

The cooling unit is followed by a grinding unit 14 which functions to grind and smooth the metal profile in the region of the aforesaid weld, when so required.

The grinding unit is followed by a guide unit 15 which, e.g., comprises a number of guide rollers 16, these rollers being configured so as to guide the profile R formed in the manufacturing line satisfactorily in towards a following hardening unit 17.

The hardening unit 17 includes a heating unit 18 comprising an electric coil 19 which configuratively is adapted to the contours or cross-sectional shape of the metal profile R so that the profile R will be heated uniformly to a sufficient extent. For example, the coil 19 may be configured so that the metal profile R will pass through a centre opening or aperture in the coil. The metal profile R is heated, for instance, by supplying the coil 19 with an alternating current of relatively high frequency and high current strength. This is effected because the coil 19 will function as a primary winding and the metal profile R as a short-circuited secondary winding. Alternatively, a pulsating direct current can be used. The coil or loop 19, which is normally cooled, and associated high frequency equipment may, of course, be varied in many ways.

According to the present invention, the profile R advanced continuously through the heating unit 18 can be heated along desired sections of its length, by applying voltage to the coil or loop 19 intermittently, i.e. during those periods of time at which it is desired to heat the continuously advancing profile R.

The hardening unit 17 also includes a cooling unit 20 by means of which the heated parts of the profile R are cooled or quenched with the aid of a gaseous and/or liquid coolant in a manner to achieve the desired hardening result.

In the case of the illustrated embodiment, those parts or areas H of the profile which have been heated and hardened in the aforedescribed manner are marked by sectioning.

The hardening unit is followed by a surface cleaning unit 21, which may have the form of a washing or blasting device, and which functions to clean the surfaces of the hardened parts or areas of the thin metal-sheet profile R.

There then follows a straightening unit 22 which, e.g., is provided with a number of rollers 23 for straightening the profile R advanced through the unit 22 in the manner desired.

Following the straightening unit 22, in the direction in which the profile is advanced through the manufacturing line, is a final shaping or forming unit 24 which functions to give the desired final shape to the profile R, and then primarily to the non-hardened parts or areas 0 thereof. The final shaping unit 24 may include so-called flying press, punch and cutting units, which may be arranged in series, one after the other, or which may be so combined mutually as to enable the various operations to be carried out simultaneously in one single tool. Naturally, the shaping unit 24 and the tool arrangement in the shaping unit 24 may be adapted to the desired configuration, shaping and working of the non-hardened parts 0 of the tubular profile R. The tubular profile R with slots S is partly opened out in the final shaping unit 24, wherein the slot S forms edge parts K of the partly opened out tubular profile R in its non-hardened parts 0, whereby said part may be given the sheet thickness of the metal strip B and thus a relatively large width, if so desired. The flying punch and cutting unit functions to provide ,e.g., holes A and to sever the profile R, so as to produce final products D in the manufacturing line during continuous advancement of the profile R.

When wishing to use double sheet-thicknesses in the non-hardened parts 0 of the tubular profile R, the slots S can be omitted, in which case the flying press in the forming unit 24 will merely function to flatten primarily the non-hardened parts 0 of said profile R, this flattened part naturally being narrower than in the case in which the aforementioned opening-out method is applied. The punch and cutting unit of the forming unit 24 provides desired hole A and cuts the end products D to their intended lengths.

The end products D produced in the manufacturing line may then be handled by a handling unit, such as an industrial robot 25 for instance, which places said end products on a loading pallet 26 or on a conveyor or some like device for transportation of said products to another station.

Thus, when practising the inventive method a starting blank is first given an initial profile or shape in a manufacturing line, whereafter this initial profile is hardened over mutually spaced areas or parts thereof and the profile is then, e.g., further shaped at the non-hardened areas or parts of said initial profile, whereafter the profile is cut into desired end-product lengths. The manufacturing line is so designed that the starting strip and the profile can be advanced continuously without time-wasting interruption in manufacture and preferably at a uniform speed, which is particularly important and significant in the present context.

The inventive method thus enables profiled, thin metal-sheet products to be produced in a highly rational and effective manner, said products possibly having a hardened centre part and non-hardened end zones in differing forms.

It will be understood that the manufacturing line need not necessarily include all of the aforesaid units and stations, and that it is also not necessary for all of these units and stations to be active during running of the manufacturing line.

It will also be understood that within the concept of the invention, the positions of some of the stations and units in the aforedescribed manufacturing line may exchange places in said line, and it can be mentioned, by way of example, that the cooling unit 13 and the grinding unit 14 may exchange places, for instance.

In those instances when it is not desired that the manufacturing line will include so-called flying devices for the purpose of achieving product-flow continuity in the manufacturing line, so-called storage loops can be used by way of alternative, when such is possible.

In the case of the illsutrated embodiment, the end-parts of the manufactured products D are non-hardened and finally shaped, although it will be understood that also the centre part of said product or other suitable parts thereof may be left unhardened and shaped in a desired fashion. It will also be understood that an individual end product may be hardened in part over several different regions with mutually different degrees of hardness if so desired, and finally shaped in a selected number of zones.

It will also be seen that a desired, selected hardening pattern can readily be achieved by varying the current supply to the heating unit 18 and/or by varying the cooling process in the cooling unit 20 and/or by varying the speed at which the profile is advanced in the manufacturing line. It should be mentioned, however, that a uniform speed is normally preferred.

Furthermore, although not shown, it may be appropriate to include in the manufacturing line a normalizing unit, either upstream or downstream of the hardening unit 17. The primary purpose of the normalizing unit is to normalize the non-hardened parts 0, although when the normalizing unit is positioned upstream of the hardening unit 17 those parts of the profile R which are to be hardened will also be pre-heated at the same time. Similar to the heating unit 18, the normalizing unit may, for instance, include an electric coil or loop which is so configured as to be adapted to the contours or cross-sectional shape of the metal profile R, so as to achieve sufficiently uniform heating of the profile R, and the coil or loop may, for instance, be so configured as to enable the profile R to pass through a centre hole or opening in the coil. The coil is powered, for instance, with alternating current of relatively high frequency, or alternatively by a pulsating direct current.

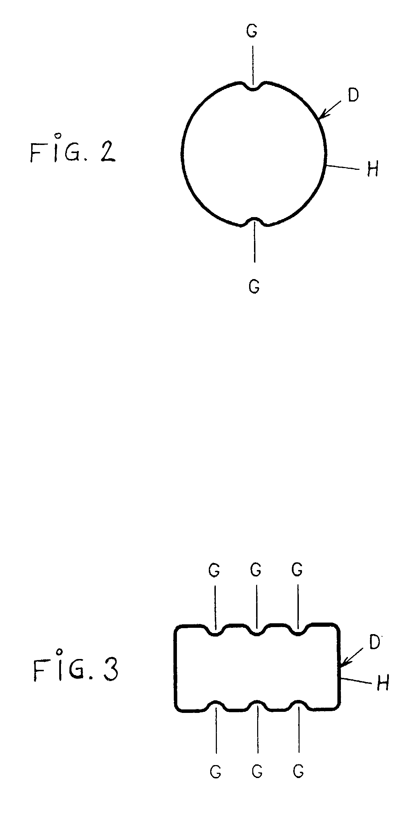

In a particularly favoured embodiment, the shaping or forming unit 10 also includes means for forming intermittently on the metal strip B one or more longitudinally extending stiffenings in the form of grooves or flutes G, these stiffening grooves being intended to extend through a selective length along at least certain parts of the hardened centre part H of the end product D. Examples of such stiffening grooves G are shown in Figures 2 and 3, although it will be understood that the number of grooves provided, the shape of said grooves and their positions can be varied widely. The length of respective grooves G can also be varied as desired.

The stiffenings G may be applied advantageously to the metal strip B at the beginning of the shaping unit 10, when the strip B is still flat, although it is also possible, of course, to form the stiffenings in the shaping unit 10 at a later stage.

It is also conceivable to provide a separate shaping unit for the purpose of forming the intermittent stiffening grooves G. The groove forming unit may also be integral with the straightening unit 8, for instance.

One effective technical solution of the problem of providing the longitudinally extending stiffening grooves G on the metal strip B is to provide forming rolls which can be manouvered between an active position in which they are in engagement with the strip B and an inactive position in which they are out of engagement with said strip at time set intervals. Another alternative is to configure the forming rollers in a manner such that the forming of said stiffening grooves will be interrupted despite said rolls being in continuous engagement with the strip B.

It is also possible, of course, to provide the profile R with continuous stiffenings in the form of grooves or flutes for instance, these grooves being formed, for instance, in the forming unit 10.

The final shaping unit may alternatively include a cutting device, for instance in the form of a rotary cutting disc, which cuts the profile instead of clipping the profile, wherewith cutting of the profile may take place before the final shaping of the profile is carried out, this final shaping of the profile being effected simultaneously at both ends of the product.

It will be understood that advancement of the metal strip B through the manufacturing line is effected in a conventional manner, therewith involving the use of separate drive stations or by combining the drive with rolls which also fulfil other functions.

## Claims

1. A continuous line for producing partly hardened profiled thin metal sheet products (D) from a coiled metal strip (2), comprising a decoiler (1) for decoiling the strip, a roll forming unit (10) for forming the strip (B) into a profile (R), a heating unit (18) including an intermittently activated electric coil (19) adapted in shape to the cross sectional shape of the roll formed profile for heating only certain parts (R) along the length of the profile, a quenching unit (20) for cooling the profile and hardening the heated parts (R) thereof, and a flying cutting unit (24) for cutting the profile at at least some of the non hardened parts (0) thereof so as to obtain products (D) of desired length.

2. A continuous line according to Claim 1, **characterized** in that the flying cutting unit is part of a final shaping unit (24) that includes means which function to bring primarily the non-hardened parts (0) of the profile (R) to a desired final shape.

3. A continuous line according to Claim 1 or 2 **characterized** in that it includes a punching unit (7) which is located upstream of the roll forming unit (10) or upstream of the hardening unit (17).

4. A continuous line according to any one of the preceding Claims, **characterized** in that the roll forming unit (10) is arranged to form a tubular profile, and a welding unit (12) located between the roll forming unit (10) and the heating unit (18) is arranged to weld together the side edges of the tubular profile.

## Patentansprüche

1. Kontinuierliche Produktionslinie zur Herstellung teilweise gehärteter dünner Metallblech-Profilprodukte (D) aus einem aufgewickelten Metallstreifen (2), welche umfaßt, eine Abrollhaspel (1) zum Abrollen des Streifens, eine Walzen-Einheit (10), um dem Streifen (B) ein Profil (R) zu verleihen, eine Heizeinheit (18) einschließlich einer diskontinuierlich betriebenen elektrischen Heizspule (19), deren Form dem Querschnittsbereich des durch die Walze erzeugten Profils so angepaßt ist, daß nur bestimmte Bereiche (R) entlang der Länge des Profils erhitzbar sind, eine Abschreckeinheit (20) zum Abkühlen des Profils und Härten erhitzter Bereiche (R) und eine Schlagmesser-Einheit (24) zum Schneiden des Profils an mindestens einigen seiner nicht gehärteten Bereiche (0), um Produkte (D) mit gewünschter Länge zu erhalten.

2. Kontinuierliche Linie nach Anspruch 1, dadurch gekennzeichnet, daß
die Schlagmesser-Eeinheit Teil einer End-Formgebungseinheit (24) ist, die Mittel enthält, die überwiegend die nicht gehärteten Bereiche (0) des Profils (R) in eine gewünschte endgültige Form bringen.

3. Kontinuierliche Linie nach Anspruch 1 oder 2, dadurch gekennzeichnet, daß
diese eine Stanzeinheit (7) aufweist, die stromaufwärts der Walzen-Einheit (10) oder stromaufwärts der Härtungseinheit (17) angeordnet ist.

4. Kontinuierliche Linie nach einem der vorhergehenden Ansprüche, dadurch gekennzeichnet, daß
die Walzen-Einheit (10) derart angeordnet ist, daß ein röhrenförmiges Profil gebildet wird und zwischen der Walzen-Einheit (10) und der Heizeinheit (18) eine Schweißeinheit (12) angeordnet ist, um die Seitenkanten des röhrenförmigen Profils miteinander zu verschweißen.

## Revendications

1. Ligne continue de production de produits en feuilles métalliques minces (D) profilées, partiellement durcies, à partir d'une bande de métal bobinée (2), comprenant un dérouleur (1) pour dérouler la bande, une unité de laminage (10) destinée à donner à la bande (B) la forme d'un profilé (R), une unité de chauffage (18) comportant une bobine électrique (19) activée de manière intermittente et ayant une forme adaptée à la forme en coupe du profilé laminé pour chauffer seulement certaines parties (R) le long de la longueur du profilé, une unité de trempe (20) pour refroidir le profilé et durcir les parties chauffées (R) de celui-ci, et une unité de coupe à la volée (24) pour couper le profilé à l'endroit d'au moins certaines des parties non-durcies (O) de celui-ci de manière à obtenir des produits (D) de longueur voulue.

2. Ligne continue selon la revendication 1, caractérisée en ce que l'unité de coupe à la volée est une partie d'une unité de mise en forme finale (24) qui comporte des moyens qui agissent pour amener principalement les parties non-durcies (O) du profilé (R) à une forme finale voulue.

3. Ligne continue selon la revendication 1 ou 2, caractérisée en ce qu'elle comporte une unité de poinçonnage (7) qui est située en amont de l'unité de laminage (10) ou en amont de l'unité de durcissement (17).

4. Ligne coniinue selon l'une quelconque des revendications précédentes, caractérisée en ce que l'unité de laminage (10) est agencée pour former un profilé tubulaire, et une unité de soudage (12) située entre l'unité de laminage (10) et l'unité de chauffage (18) est agencée pour souder ensemble les bords latéraux du profilé tubulaire.
